# EUROPÄISCHE PATENTANMELDUNG

(11) **EP 1 750 391 A1**
(43) Veröffentlichungstag der Anmeldung: **07.02.2007**
(21) Anmeldenummer: 05016982.0
(22) Anmeldetag: 04.08.2005
(51) Int. Cl.: H04L 12/24, H04L 12/26

(54) **Überwachung eines Agenten in einem Managementsystem**

(71) Anmelder: SIEMENS AKTIENGESELLSCHAFT, 80333 München (DE)
(72) Erfinder: Hirsch, Lucian, 81373 München (DE)

(57) **Zusammenfassung**

Die Erfindung betrifft ein Verfahren zum Betreiben eines mindestens einen Manager (MANAGER) und mindestens einen Agenten (AGENT) umfassenden Managementsystems, bei dem der Manager (MANAGER) von dem Agenten (AGENT) an den Manager (MANAGER) zu versendende Nachrichten subskribiert. Der Manager (MANAGER) stellt fest, dass er innerhalb einer bestimmten Zeitspanne (AT) keine Nachricht von dem Agenten (AGENT) empfangen hat. Erfindungsgemäß sendet der Manager (MANAGER) eine eine Antwortnachricht (checkSurveillance-Response) anfordernde Anforderungsnachricht (checkSurveillance-Request) an den Agenten (AGENT), wobei die Antwortnachricht (checkSurveillance-Response) Informationen betreffend mindestens eine Subskription des Managers (MANAGER) umfasst. Weiterhin betrifft die Erfindung einen Manager (MANAGER) und einen Agenten (AGENT) zur Durchführung des Verfahrens.

## Beschreibung

Die Erfindung betrifft ein Verfahren zum Betreiben eines mindestens einen Manager und mindestens einen Agenten umfassenden Managementsystems, bei dem der Manager von dem Agenten an den Manager zu versendende Nachrichten subskribiert.

Gemäß den Prinzipien eines Managementnetzes, auch als TMN-Prinzipien (TMN: Telecommunications Management Network) bezeichnet, existieren mehrere Managementschichten für das Management eines Kommunikationssystems - wie beispielsweise eines Mobilfunkkommunikationssystems -, wobei jede Schicht mit Ausnahme der obersten und untersten Schicht eine doppelte Funktion, nämlich eine Manager- und eine Agentenfunktion besitzt. Im managenden System ("managing system") übt jede Ebene außer der untersten eine Manager-Funktion für die darunterliegende Ebene aus. Im gemanagten System ("managed system") kommt jeder Ebene außer der obersten eine AgentenFunktion für die nächsthöhere Schicht zu.

Manager starten zur Netzüberwachung und -kontrolle Operationen, indem sie sogenannte "requests" versenden, die von Agenten ausgeführt werden, und erhalten entsprechende Rückmeldungen, sogenannte "responses", von den Agenten. Elemente des Telekommunikationsnetzes, auch als Ressourcen des Telekommunikationsnetzes bezeichnet, die in einer TMN-Hierarchie die Rolle eines Agenten ausüben, erkennen relevante Ereignisse, sogenannte "events", wie z.B. Alarme, generieren entsprechende Mitteilungen, sogenannte "notifications", und übertragen sie in Form von Ereignismeldungen, sogenannten "event reports", an Manager, um ein effizientes Netzmanagement zu ermöglichen.

Das Netzwerkmanagement kann unter anderem das Fehlermanagement (Fault-Management) und/oder das Konfigurationsmanagement (Configuration Management) und/oder das Sicherheitsmanagement (Security-Management) und/oder das des Abrechnungsmanagement (Accounting-Management) und/oder das Leistungsmanagement (Performance-Management) umfassen. Durch das Netzwerkmanagement sollen geeignete Mechanismen zur Informationsverteilung und -verwaltung bereitgestellt werden, so dass bei Bedarf ein umfassendes Bild über den Netzzustand zur Verfügung steht und die einzelnen Ressourcen des Telekommunikationsnetzes effizient überwacht und konfiguriert werden können.

Die Manager-Agent-Kommunikation erfolgt über sogenannte Management-Schnittstellen bzw. Manager-Agent-Schnittstellen, die in einer objekt-orientierten Umgebung durch ein Kommunikationsprotokoll, wie z.B. CMIP (Common Management Information Protocol) nach ITU-T X.711 oder CORBA (Common Object Request Broker Architecture), und durch ein Objektmodell gekennzeichnet sind. Objektmodelle dienen der Modellierung von Ressourcen des Telekommunikationsnetzes, wobei diese Ressourcen bei der Modellierung in Objektklassen eingeteilt werden.

Solche Schnittstellen gibt es beispielsweise zwischen einerseits der Netzwerkelementmanagement-Ebene (Network Element Management Level) und andererseits der Netzwerkelement-Ebene (Network Element Level). Ein Beispiel für Netzeinrichtungen dieser Manager-Agent-Schnittstelle stellen die Betriebs- und Wartungszentren (OMC: Operation and Maintenance Center) auf der Seite der Netzwerkelementmanagement-Ebene dar, sowie auf der Seite der Netzwerkelement-Ebene Einrichtungen wie z.B. Basisstationen des Basisstationssystems (BSS: Base Station System) eines GSM Mobilfunknetzes, oder Basisstationen anderer Kommunikationsnetze, beispielsweise NodeB's eines UMTS Mobilfunknetzes (UMTS: Universal Mobile Telecommunication System), oder Funkzugangspunkte eines WLAN-Systems (WLAN: Wireless Local Area Network) beispielsweise gemäß einem der IEEE 802.11-Standards.

Management-Schnittstellen bzw. Manager-Agent-Schnittstellen existieren auch zwischen einerseits der Netzwerkmanagement-Ebene (Network Management Level) und andererseits der Netzwerkelementmanagement-Ebene. Ein Beispiel für Netzeinrichtungen zu dieser Manager-Agent-Schnittstelle stellen die Netzwerkmanagementzentren (NMC: Network Management Center) auf der Seite der Netzwerkmanagement-Ebene und die Betriebs- und Wartungszentren (OMC: Operation and Maintenance Center) auf der Seite der Netzwerkelementmanagement-Ebene z.B. im genannten GSM oder einem anderen Mobilfunk- oder Telekommunikationsnetz dar.

Der Erfindung liegt die Aufgabe zugrunde, ein effizientes Verfahren zum Betreiben eines Managementsystems und Vorrichtungen zur Durchführung des Verfahrens aufzuzeigen.

Diese Aufgabe wird durch ein Verfahren mit den Merkmalen des Anspruchs 1, sowie durch Vorrichtungen mit Merkmalen von nebengeordneten Ansprüchen gelöst. Vorteilhafte Ausgestaltungen und Weiterbildungen sind Gegenstand von Unteransprüchen.

Bei dem erfindungsgemäßen Verfahren zum Betreiben eines zumindest einen Manager und zumindest einen Agenten umfassenden Managementsystems subskribiert der Manager von dem Agenten an den Manager zu versendende Nachrichten. Der Manager stellt fest, dass er innerhalb einer bestimmten Zeitspanne keine Nachricht von dem Agenten empfangen hat. Erfindungsgemäß sendet der Manager eine eine Antwortnachricht anfordernde Anforderungsnachricht an den Agenten und empfängt die Antwortnachricht von dem Agenten, wobei die Antwortnachricht Informationen betreffend mindestens eine Subskription des Managers umfasst.

Das erfindungsgemäße Verfahren ermöglicht eine Überwachung eines Agenten durch einen Manager eines Managementsystems. Bei dem Manager kann es sich z.B. um ein Netzwerkmanagementzentrum oder ein Betriebs- und Wartungszentrum eines Mobilfunkkommunikationssystems handeln, bei dem Agenten um ein Betriebs- und Wartungszentrum oder ein Netzelement des Mobilfunkkommunikationssystems. Die Erfindung ist unabhängig von der konkreten Ausgestaltung von Manager und Agent, sowie von der Art des Systems, welches von dem Managementsystem überwacht wird, und von dem Kommunikationsprotokoll zwischen Manager und Agent.

Eine Subskription erfolgt vorzugsweise, indem der Manager den Agenten informiert, welche Nachrichten er von ihm zu empfangen wünscht, und der Agent daraufhin einen managerspezifischen Filter entsprechend einrichtet. Ein Agent kann für einen Manager eine oder mehrere Subskriptionen verwenden. Z.B. kann ein Manager bei einem Agent eine Subskription für Alarme und eine andere Subskription für Konfigurations-Management bezogene Nachrichten haben.

Der Manager überprüft, ob er innerhalb einer bestimmten Zeitspanne zumindest eine Nachricht von dem Agenten empfangen hat. Trifft dies nicht zu, sendet der Manager eine Anforderungsnachricht an den Agenten. Die Anforderungsnachricht teilt dem Agenten mit, dass eine Antwortnachricht zu versenden ist, wobei die Antwortnachricht Informationen über mindestens eine Subskription des Managers umfasst. Die Informationen betreffen bei Vorhandensein von nur einer Subskription des Managers bei dem Agenten diese Subskription, bei Vorhandensein von mehreren Subskriptionen des Managers bei dem Agenten können die Informationen eine, mehrere oder alle dieser Subskriptionen betreffen. Das Verfahren kann in Bezug auf mehrere Zeitspannen oder kontinuierlich durchgeführt werden, wobei diese Zeitspannen vorzugsweise gleich lang sind und direkt aufeinander folgen.

In Weiterbildung der Erfindung führt der Manager das Verfahren in Bezug auf eine Mehrzahl von Agenten durch. Dies bedeutet, dass der Manager jeweils zumindest eine Subskription bei einer Mehrzahl von Agenten durchführt, wobei die jeweils subskribierten Nachrichten von Agent zu Agent unterschiedlich sein können. Weiterhin stellt der Manager in Bezug auf mehrere Agenten fest, dass er in jeweils einer bestimmten Zeitspanne keine Nachricht von dem jeweiligen Agenten empfangen hat. Hierbei kann sich die von dem Manager verwendete Zeitspanne von Agent zu Agent unterscheiden. An jeden Agenten, von welchem er in der jeweils verwendeten Zeitspanne keine Nachricht empfangen hat, sendet er eine Anforderungsnachricht und empfängt daraufhin die entsprechende Antwortnachricht.

Vorteilhaft ist es, wenn der Manager die gleiche Zeitspanne für eine Mehrzahl von Agenten verwendet. Die gleiche Zeitspanne bedeutet, dass die zeitliche Lage und die Länge der für die Überprüfung des Nachrichtenempfangs verwendete Zeitspanne für mehrere Agenten die gleiche ist. Dies entspricht der Verwendung eines gemeinsamen Timers in Bezug auf mehrere Agenten.

In Ausgestaltung der Erfindung verwendet der Manager eine erste Zeitspanne für eine erste Gruppe von Agenten, und eine zweite gegenüber der ersten Zeitspanne unterschiedlich lange Zeitspanne für eine zweite Gruppe von Agenten. Hierbei umfasst jede Gruppe zumindest zwei Agenten. Es wird somit pro Gruppe ein Timer zur Überwachung eingesetzt. Die Aufteilung der Agenten in Gruppen kann z.B. in Bezug auf ihre Funktion oder Ausfallwahrscheinlichkeit erfolgen.

Die Informationen betreffend mindestens eine Subskription des Managers können enthalten:
- Identifikationsinformationen von mindestens einer Subskription, und/oder
- Informationen über zumindest eine Kategorie von von dem Agenten gemäß mindestens einer Subskription an den Manager zu versendenden Nachrichten, und/oder
- Informationen über eine von dem Agenten für mindestens eine Subskription verwendete Filtereinstellung.
Vorzugsweise umfassen die Informationen betreffend mindestens eine Subskription des Managers alle die jeweilige Subskription beschreibenden Parameter.

In Weiterbildung der Erfindung fordert die Anforderungsnachricht eine weitere Antwortnachricht an, wobei es sich bei der weiteren Antwortnachricht um eine von dem Manager subskribierte Nachricht handelt. Während die Antwortnachricht, welche die Informationen über mindestens eine Subskription umfasst, den Manager über den Zustand der jeweiligen Subskription informiert, zeigt die Versendung der weiteren Antwortnachricht an, dass die Nachrichtenversendung gemäß der jeweiligen Subskription des Managers funktioniert. Vorteilhaft ist es, wenn es sich bei der weiteren Antwortnachricht um eine Heartbeat-Nachricht handelt, beschrieben in dem Standarddokument 3GPP TS 32.352 ("Communciation Surveillance Integration Reference Point: Information Service").

In Ausgestaltung der Erfindung empfängt der Manager von dem Agenten Nachrichten, welche zu Zwecken der Überprüfung der Kommunikationsschnittstelle zwischen Manager und Agent gesendet werden, ausschließlich auf die Anforderungsnachricht hin. Insbesondere empfängt der Manager gemäß dieser Ausgestaltung keine periodisch von dem Agenten versendeten Heartbeat-Nachrichten.

Der erfindungsgemäße Manager weist Mittel auf zum Subskribieren von von dem Agenten an den Manager zu versendenden Nachrichten, Mittel zum Feststellen, dass er innerhalb einer bestimmten Zeitspanne keine Nachricht von dem Agenten empfangen hat, Mittel zum Versenden einer eine Antwortnachricht anfordernden Anforderungsnachricht an den Agenten, sowie Mittel zum Empfangen der Antwortnachricht von dem Agenten, wobei die Antwortnachricht Informationen betreffend mindestens eine Subskription des Managers umfasst.

Das erfindungsgemäße Managementsystem umfasst Mittel zum Einrichten von mindestens einer Subskription auf Anforderung des Managers bei dem Agenten für von dem Agenten an den Manager zu versendende Nachrichten, Mittel des Managers zum Festellen, dass er innerhalb einer bestimmten Zeitspanne keine Nachricht von dem Agenten empfangen hat, Mittel des Managers zum Versenden einer eine Antwortnachricht anfordernden Anforderungsnachricht an den Agenten, sowie Mittel des Agenten zum Empfangen der Anforderungsnachricht und zum Versenden der Antwortnachricht, wobei die Antwortnachricht Informationen betreffend mindestens eine Subskription des Managers umfasst.

Sowohl der erfindungsgemäße Manager als auch das erfindungsgemäße Managementsystem eignen sich insbesondere zur Durchführung des erfindungsgemäßen Verfahrens, wobei dies auch auf die Ausgestaltungen und Weiterbildungen zutreffen kann. Hierzu können sie weitere geeignete Mittel umfassen.

Im folgenden wird die Erfindung anhand eines Ausführungsbeispiels näher erläutert. Dabei zeigt:

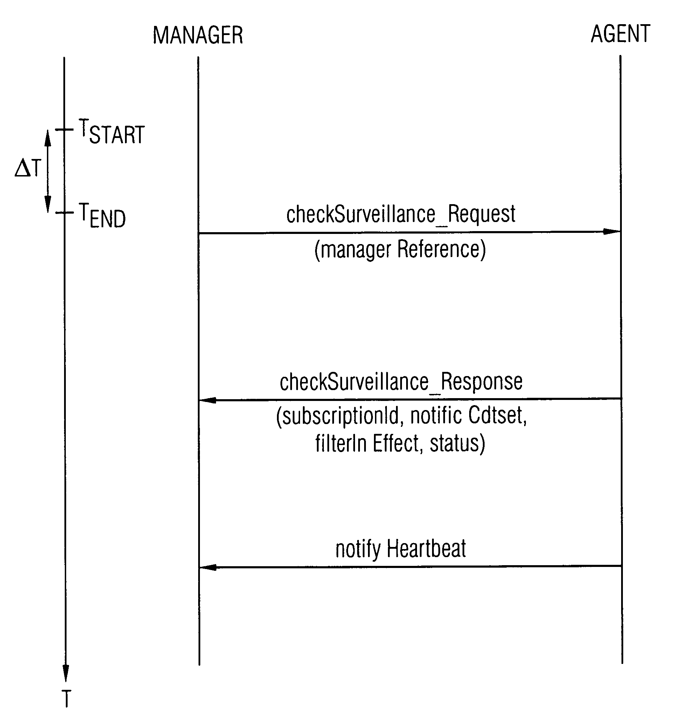

- Figur 1:: den zeitlichen Ablauf eines erfindungsgemäßen Verfahrens.

Das effiziente Management eines Telekommunikationsnetzes setzt voraus, dass die relevanten Ereignismeldungen von untergeordneten Agenten möglichst rasch und fehlerfrei an Manager-Systeme weitergeleitet werden. Hierfür kann ein Manager bei Agenten die für ihn relevanten Ereignismeldungen "abonnieren". Für diesen Zweck definiert der 3GPP Standard TS 32.302 ("Notification Integration Reference Point (IRP): Information Service"), insbesondere in Kapitel 6.3.1, einen so genannten Subscribe-Mechanismus. Unabhängig von dem für die jeweilige Manager-Agent-Schnittstelle verwendeten Kommunikationsprotokoll sendet der Manager eine Anforderung an den Agenten, welche Angaben über die Kategorien und Parameterwerte der für ihn relevanten Ereignismeldungen enthält. Diese Anforderung hat die Erzeugung eines geeigneten Filters im Agenten zur Folge.

Die Aufgabe eines Filters ist es, nur diejenigen Notifications zum Manager weiterzuleiten, welche bestimmten Kriterien genügen, so dass ein Manager den Informationsfluss vom Agenten zum Manager nach seinen Anforderungen beeinflussen und steuern kann. Ein solcher Filter kann beispielsweise bei einer CORBA-basierten Schnittstelle mit Hilfe des so genannten "Notification Service" gemäß OMG "Notification Service Specification V1.1", insbesondere Kapitel 2.1.2, oder bei einer CMIP-basierten Schnittstelle mit Hilfe von Event Forwarding Discriminators gemäß ITU-T X.734 "Systems Management: Event Report Management Function", insbesondere Kapitel 8.1.2, realisiert werden.

Um die Übertragung von Ereignismeldungen über die Management-Schnittstelle zu beginnen, sendet ein Manager gemäß 3GPP TS 32.302, insbesondere Kapitel 6.3.1, eine Subscribe-Anforderung an den Agenten, welche eine als "managerReference" bezeichnete Identifikationsinformation des Managers enthält. Der Agent antwortet auf die Subscribe-Anforderung mit einer Nachricht, welche die als "subscriptionId" bezeichnete Identifikationsinformation der Subskription enthält. Diese Identifikationsinformation der Subskription kann für die weitere Behandlung der Subskription verwendet werden.

Kommunikationsfehler, hervorgerufen z.B. durch den Ausfall des Agenten oder der physikalischen oder logischen Verbindung zwischen Manager und Agent, sollten von jedem betroffenen Manager rasch erkannt werden. Zu diesem Zweck wird gemäß dem Stand der Technik an der Manager-Agent Schnittstelle ein Überwachungs-Mechanismus implementiert, welcher in dem Standarddokument 3GPP TS 32.352 ("Communication Surveillance Integration Reference Point: Information Service"), insbesondere in Kapitel 5.3.1.1 und Kapitel 6.5.1 spezifiziert ist. Dieser Mechanismus basiert auf den folgenden Grundlagen: der Agent sendet periodisch eine so genannte Heartbeat-Nachricht an den Manager. Der regelmäßige und korrekte Empfang dieser Heartbeat-Nachricht bedeutet für den Manager, dass sowohl der Agent als auch die Kommunikation an der Manager-Agent-Schnittstelle korrekt funktionieren. Der Manager stellt die Zeit zwischen zwei aufeinanderfolgenden Heartbeat-Nachrichten in Abhängigkeit von der Wichtigkeit des zu überwachenden Agenten ein. Um den regelmäßigen Empfang der Heartbeat-Nachrichten zu kontrollieren, verwendet der Manager für jeden einzelnen der von ihm zu überwachenden Agenten einen eigenen Timer, dessen Ablaufzeit der Periode der Heartbeat-Nachrichten entspricht.

Figur 1 zeigt den Ablauf des erfindungsgemäßen Verfahrens, wobei der Ablauf der Zeit T nach unten aufgetragen ist. Über den Pfeilen zwischen dem Manager MANAGER und dem Agenten AGENT stehen die Namen der jeweils übertragenen Nachrichten, während unter den Pfeilen in runden Klammern Informationsgehalte der Nachrichten angegeben sind. Bei dem Manager MANAGER kann es sich z.B. um ein Netzwerkmanagementzentrum (NMC) und bei dem Agenten AGENT um ein Betriebs- und Wartungszentrum (OMC) eines Mobilfunkkommunikationssystems handeln.

Es wird eine bestimmte Überwachungsperiode ΔT betrachtet, welche zwischen einem Anfangszeitpunkt T_{START} und einem Endzeitpunkt T_{END} liegt. Der Manager MANAGER überprüft, ob er innerhalb der Überwachungsperiode ΔT eine Nachricht von dem Agenten AGENT empfangen hat. In Figur 1 ist dies nicht der Fall, d.h. das Ergebnis der Überprüfung ist negativ. Die Überprüfung fällt positiv aus, wenn der Manager MANAGER innerhalb der Überwachungsperiode ΔT eine beliebige Nachricht von dem Agenten AGENT empfangen hat, beispielsweise eine Heartbeat-Nachricht oder eine Alarm-Notifikation.

Auf die Feststellung hin, dass innerhalb der Überwachungsperiode ΔT keine Nachricht von dem Agenten AGENT empfangen wurde, sendet der Manager MANAGER eine Nachricht checkSurveillance-Request an den Agenten AGENT. Die Nachricht checkSurveillance-Request enthält die Identifikationsinformation managerReference des Managers MANAGER. Durch die Nachricht checkSurveillance-Request wird der Agent AGENT aufgefordert, die im folgenden erläuterten Nachrichten checkSurveillance-Response und notifyHeartbeat an den Manager MANAGER zu senden.

Der Agent AGENT empfängt die Nachricht checkSurveillance-Request und erkennt, dass er die Antwortnachricht checkSurveillance-Response an den Manager MANAGER zu versenden hat.

Die Antwortnachricht checkSurveillance-Response des Agenten AGENT umfasst die folgenden Informationen hinsichtlich einer, mehrerer oder aller Subskriptionen des Managers MANAGER:
- Die Subskriptionskennung subscriptionId. Diese wurde wie oben beschrieben von dem Agenten AGENT bei Einrichtung der jeweiligen Subskription vergeben und dem Manager MANAGER mitgeteilt.
- Die durch die jeweilige Subskription ausgewählten Kategorien von Nachrichten bzw. Notifikations-Typen notificCatSet. Der Manager MANAGER hat diese Kategorien in seiner oben beschriebenen Subscribe-Anforderung angegeben. Notifikations-Typen notificCatSet können z.B. Alarme und/oder Konfigurationsänderungen sein.
- Die aktuelle Filtereinstellung FilterInEffect des Agenten AGENT in Bezug auf die jeweilige Subskription des Managers MANAGER. Hierbei kann es sich z.B. um Parameterwerte handeln, welche eine Nachricht enthalten muss, um den Filter zu passieren und an den Manager MANAGER weitergeleitet zu werden.
Vorzugsweise beziehen sich die genannten Informationen auf alle Subskriptionen des Managers MANAGER bei dem Agent AGENT, d.h. für jede Subskription weist die Antwortnachricht checkSurveillance-Response einen eigenen Satz der Informationen subscriptionId, notificCatSet und FilterInEffect auf.

Weiterhin enthält die Antwortnachricht checkSurveillance-Response die Statusinformation status, welche anzeigt, ob die von dem Manager mittels der Nachricht checkSurveillance-Request angeforderte Operation erfolgreich war.

Der Empfang der Antwortnachricht checkSurveillance-Response zeigt dem Manager MANAGER an, dass seine Subskriptionsparameter im Agenten AGENT noch gültig sind und die Kommunikationsschnittstelle zwischen dem Manager MANAGER und dem Agenten AGENT nicht gestört ist. Eine ausbleibende Antwortnachricht checkSurveillance-Response auf die Nachricht checkSurveillance-Request des Managers MANAGER wird von dem Manager MANAGER derart interpretiert, dass der Agent AGENT ausgefallen ist oder dass ein Fehler bei dem Agenten AGENT bezüglich der Verwaltung der Subskriptionen des Managers MANAGER vorliegt, oder dass die Kommunikationsschnittstelle zwischen dem Agenten AGENT und dem Manager MANAGER gestört ist. Der Operator am Manager MANAGER wird hierüber informiert und kann geeignete Reparaturmaßnahmen einleiten.

Im Anschluss sendet der Agent AGENT die Nachricht notifyHeartbeat gemäß dem Standard TS 32.352, insbesondere Kapitel 6.5.1. Der zu dieser Nachricht notifyHeartbeat gehörige Parameter "heartbeatPeriod" hat den Wert Null, da keine automatische Generierung der Hearbeat-Nachricht im Agenten AGENT erfolgt. Vielmehr versendet der Agent AGENT die Nachricht notifyHeartbeat auf explizite Anweisung des Managers MANGER, wobei diese Anweisung durch die Nachricht checkSurveillance-Request erfolgt ist. Der Empfang der Nachricht notifyHeartbeat ist eine Bestätigung für den Manager MANAGER, dass die Generierung und das Absenden von Notifikationen im Agenten AGENT ordnungsgemäß funktionieren. Eine fehlende Nachricht notifyHeartbeat auf die Nachricht checkSurveillance-Request des Managers MANAGER wird von dem Manager MANAGER derart interpretiert, dass eine fehlerhafte Einstellung der "event reporting" Komponente im Agenten AGENT vorliegt, z.B. im "Notification Service" bei einer CORBA-basierten Schnittstelle oder im "Event Forwarding Discriminator" bei einer CMIP-basierten Schnittstelle. Der Operator am Manager MANAGER wird hierüber informiert und kann geeignete Reparaturmaßnahmen einleiten.

Der Ablauf der Überwachungsperiode ΔT entspricht dem Ablauf eines Timers, welchen der Manager MANAGER zur Überwachung des Agenten AGENT einsetzt. Nach Ablauf der Überwachungsperiode ΔT wird ausgewertet, ob Nachrichten von dem Agenten eingegangen sind, und die Versendung der Nachricht checkSurveillance-Request erfolgt, falls diese Überprüfung negativ ausfällt. Nach Ablauf der Überwachungsperiode ΔT startet der Timer erneut, d.h. der Startzeitpunkt T_{START} der nächsten Überwachungsperiode ΔT entspricht dem Endzeitpunkt T_{END} der vorhergehenden Überwachungsperiode ΔT. Der in Figur 1 dargestellte Nachrichtenaustausch zwischen Manager MANAGER und Agent AGENT erfolgt somit parallel zum Ablauf der folgenden Zeitspanne oder Zeitspannen ΔT, falls der Manager MANAGER feststellt, dass keine Nachrichten von dem Agenten eingegangen sind.

Die Länge der Überwachungsperiode ΔT wird dem Überwachungszweck bzw. der Art der Agenten AGENT angepasst. Auf diese Weise kann die Länge der Überwachungsperiode ΔT bei kritischen Agenten besonders kurz eingestellt werden. Die maximale Zeit, welche bis zum Erkennen des Agentenausfalls verstreichen darf, beträgt zwei Überwachungsperioden ΔT. Denn wenn ein Agent zu Beginn einer Überwachungsperiode ΔT eine Nachricht sendet und danach ausfällt, stellt der Manager MANAGER dies erst nach dem Ablauf der darauf folgenden Überwachungsperiode ΔT fest. Dementsprechend sollte die Länge der Überwachungsperiode ΔT höchstens die Hälfte der zulässigen Zeitspanne, welche zum Erkennen eines Agentenausfalls verstreichen darf, betragen. Sollte beispielsweise ein Operator den Ausfalls einer Basisstation spätestens nach 8 Minuten erkennen, so muss die Länge der Überwachungsperiode ΔT des der Basisstation zugeordneten Managers auf vier Minuten eingestellt werden.

Gemäß der Erfindung muss der Agent AGENT nicht die automatisch generierten Heartbeat-Nachrichten periodisch versenden. Nachrichten, welche von dem Agenten AGENT gesendet werden, um dem Manager MANAGER die Überprüfung der ordnungsgemäßen Kommunikation zwischen Manager MANAGER und Agent AGENT erlauben, sendet der Agent AGENT ausschließlich auf explizite Anforderung des Managers MANAGER. Denn erst wenn der Manager MANAGER innerhalb der Überwachungsperiode ΔT keine Nachricht von dem Agent AGENT empfangen hat, muss dieser in Abweichung von seiner üblichen Tätigkeit der Überprüfung dienende Nachrichten checkSurveillance-Response und notifyHearbeat versenden. Die beschriebene Überprüfung des Agenten AGENT bzw. der Kommunikation an der Schnittstelle zwischen Managers MANAGER und Agent AGENT erfolgt somit lediglich bei Bedarf. Dieses Vorgehen hat für den Agenten AGENT den Vorteil, dass er keinen Timer benötigt, welcher ihm die periodische Versendung der Heartbeat-Nachrichten ermöglicht.

Weiterhin wird durch die Erfindung die Last auf der Kommunikationsschnittstelle zwischen Manager MANAGER und Agent AGENT reduziert. Insbesondere bei Agenten, deren Ausfall von dem Manager MANAGER schnell erkannt werden soll, stellt der Manager MANAGER gemäß dem Stand der Technik bei Verwendung der periodisch versendeten Heartbeat-Nachrichten eine kurze Überwachungszeit ein, d.h. die Heartbeat-Nachrichten müssen von dem Agent AGENT mit einer kurzen Periodendauer gesendet werden. Dies bedeutet, dass eine Vielzahl von Nachrichten ausschließlich zum Zweck der Überwachung der Funktionstüchtigkeit des Agenten bzw. der Kommunikationsschnittstelle gesendet werden müssen. Auch bei einer Anbindung des Agenten AGENT an mehrere Manager ist die Verwendung von periodisch versendeten Heartbeat-Nachrichten nachteilig, da für jeden Manager ein eigener Timer verwendet werden muss, so dass der Rechenaufwand im Agenten erheblich ist.

Von besonderem Vorteil ist es, wenn das anhand von Figur 1 beschriebene Verfahren in Bezug auf mehrere an den Manager MANAGER angeschlossene Agenten durchgeführt wird. Der Manager MANAGER kann für die Mehrzahl von Agenten die gleiche Überwachungsperiode ΔT verwenden, beginnend mit dem Zeitpunkt T_{START} und endend mit dem Zeitpunkt T_{END}. An jeden Agenten, von welchem er innerhalb dieser Überwachungsperiode ΔT keine Nachricht empfangen hat, sendet der Manager MANAGER eine Nachricht checkSuvreillancerequest. Dieses Vorgehen weist den Vorteil auf, dass der Manager MANAGER nicht für jeden Agenten einen eigenen Timer überwachen muss. Vielmehr kann ein einheitlicher Timer für eine Mehrzahl von Agenten eingesetzt werden.

Der Manager MANAGER kann die Agenten, von welchen er Nachrichten empfängt, in Gruppen aufteilen, wobei für alle Agenten einer Gruppe der gleiche Timer verwendet wird. Auf diese Weise kann z.B. für besonders wichtige Agenten eine kurze Überwachungsperiode ΔT eingesetzt werden, und für weniger wichtige Agenten eine längere Überwachungsperiode ΔT. Z.B. kann ein Betriebs- und Wartungszentrum eines Mobilfunkkommunikationssystems einen Timer für alle BSC (Base Station Controlle) einer Netzregion verwenden, und einen anderen Timer für alle RNC (Radio Network Controller) dieser Netzregion. Gemäß dem Stand der Technik benötigt der Manager MANAGER für jeden Agenten einen eigenen Timer zur Überwachung der Heartbeat-Nachrichten. Die Gruppierung der Agenten gemäß der Erfindung weist demgegenüber den Vorteil auf, dass durch Verwendung eines Timers für eine Gruppe von Agenten der Überwachungsaufwand für den Manager MANAGER wesentlich weniger rechenintensiv ist.

## Patentansprüche

1. Verfahren zum Betreiben eines mindestens einen Manager (MANAGER) und mindestens einen Agenten (AGENT) umfassenden Managementsystems, bei dem der Manager (MANAGER) von dem Agenten (AGENT) an den Manager (MANAGER) zu versendende Nachrichten subskribiert, und feststellt, dass er innerhalb einer bestimmten Zeitspanne (ΔT) keine Nachricht von dem Agenten (AGENT) empfangen hat,
**dadurch gekennzeichnet, dass** der Manager (MANAGER)
eine eine Antwortnachricht (checkSurveillance-Response) anfordernde Anforderungsnachricht (checkSurveillance-Request) an den Agenten (AGENT) sendet, und
die Antwortnachricht (checkSurveillance-Response) von dem Agenten (AGENT) empfängt, wobei die Antwortnachricht (checkSurveillance-Response) Informationen betreffend mindestens eine Subskription des Managers (MANAGER) umfasst.

2. Verfahren nach Anspruch 1, bei dem der Manager (MANAGER) das Verfahren in Bezug auf eine Mehrzahl von Agenten (AGENT) durchführt.

3. Verfahren nach Anspruch 2, bei dem
der Manager (MANAGER) die gleiche Zeitspanne (ΔT) für eine Mehrzahl von Agenten (AGENT) verwendet.

4. Verfahren nach Anspruch 2 oder 3, bei dem
der Manager (MANAGER) eine erste Zeitspanne (ΔT) für eine erste Gruppe von Agenten (AGENT) verwendet, und eine zweite gegenüber der ersten Zeitspanne (ΔT) unterschiedlich lange Zeitspanne für eine zweite Gruppe von Agenten (AGENT).

5. Verfahren nach einem der Ansprüche 1 bis 4, bei dem die Informationen betreffend mindestens eine Subskription des Managers (MANAGER) umfassen:
• Identifikationsinformationen der mindestens einen Subskription, und/oder
• Informationen über zumindest eine Kategorie von von dem Agenten (AGENT) gemäß der mindestens einen Subskription an den Manager (MANAGER) zu versendenden Nachrichten, und/oder
• Informationen über eine von dem Agenten (AGENT) für die mindestens eine Subskription verwendete Filtereinstellung.

6. Verfahren nach einem der Ansprüche 1 bis 5, bei dem die Informationen betreffend mindestens eine Subskription des Managers (MANAGER) alle die jeweilige Subskription beschreibenden Parameter umfassen.

7. Verfahren nach einem der Ansprüche 1 bis 6, bei dem die Anforderungsnachricht (checkSurveillance-Request) eine weitere Antwortnachricht (notifyHeartbeat) anfordert, wobei es sich bei der weiteren Antwortnachricht (notifyHeartbeat) um eine von dem Manager (MANAGER) subskribierte Nachricht handelt.

8. Verfahren nach Anspruch 7, bei dem es sich bei der weiteren Antwortnachricht (notifyHeartbeat) um eine Heartbeat-Nachricht handelt.

9. Verfahren nach einem der Ansprüche 1 bis 8, bei dem der Manager (MANAGER) von dem Agenten (AGENT) Nachrichten, welche zu Zwecken der Überprüfung der Kommunikationsschnittstelle zwischen Manager (MANAGER) und Agent (AGENT) gesendet werden, ausschließlich auf die Anforderungsnachricht (checkSurveillance-Request) hin empfängt.

10. Manager (MANAGER) für ein mindestens den Manager (MANAGER) und einen Agenten (AGENT) umfassendes Managementsystem, mit
Mitteln zum Subskribieren von von dem Agenten (AGENT) an den Manager (MANAGER) zu versendenden Nachrichten,
Mitteln zum Feststellen, dass er innerhalb einer bestimmten Zeitspanne (ΔT) keine Nachricht von dem Agenten (AGENT) empfangen hat,
**gekennzeichnet durch**
Mittel zum Versenden einer eine Antwortnachricht (checkSurveillance-Response) anfordernden Anforderungsnachricht (checkSurveillance-Request) an den Agenten (AGENT), und
Mittel zum Empfangen der Antwortnachricht (checkSurveillance-Response) von dem Agenten (AGENT), wobei die Antwortnachricht (checkSurveillance-Response) Informationen betreffend mindestens eine Subskription des Managers (MANAGER) umfasst.

11. Managementsystem, welches zumindest einen Manager (MANAGER) und zumindest einen Agenten (AGENT) umfasst, mit
Mitteln zum Einrichten von mindestens einer Subskription auf Anforderung des Managers (MANAGER) bei dem Agenten (AGENT) für von dem Agenten (AGENT) an den Manager (MANAGER) zu versendende Nachrichten,
Mitteln des Managers (MANAGER) zum Feststellen, dass er innerhalb einer bestimmten Zeitspanne (ΔT) keine Nachricht von dem Agenten (AGENT) empfangen hat,
**gekennzeichnet durch**
Mittel des Managers (MANAGER) zum Versenden einer eine Antwortnachricht (checkSurveillance-Response) anfordernden Anforderungsnachricht (checkSurveillance-Request) an den Agenten (AGENT), und
Mittel des Agenten (AGENT) zum Empfangen der Anforderungsnachricht (checkSurveillance-Request) und zum Versenden der Antwortnachricht (checkSurveillance-Response), wobei die Antwortnachricht (checkSurveillance-Response) Informationen betreffend mindestens eine Subskription des Managers (MANAGER) umfasst.
